# EUROPEAN PATENT APPLICATION

(11) **EP 4 640 430 A1**
(43) Date of publication of application: **29.10.2025**
(21) Application number: 23906536.0
(22) Date of filing: 15.11.2023
(51) Int. Cl.: B32B 27/00, B29C 65/48, B32B 27/38, H05K 3/46

(54) **LAMINATE AND LAMINATE MANUFACTURING METHOD**

(30) Priority: 23.12.2022 JP 2022207046
(71) Applicant: Resonac Corporation, Tokyo 105-7325 (JP)
(72) Inventor: TAKAHASHI, Nobuyuki, Tokyo 105-7325 (JP); SAITO, Hayato, Tokyo 105-7325 (JP)
(74) Representative: Strehl & Partner mbB
(86) International application number: PCT/JP2023/041025
(87) International publication number: WO 2024/135166

(57) **Abstract**

Provided is a laminate excellent in thermal durability and a method for manufacturing a laminate. A laminate includes, in this order: a first resin layer (31); a first conductive layer (32); an insulating layer (33); and a second conductive layer (34). The first resin layer includes an accommodation portion, and the first conductive layer is disposed in the accommodation portion. An adhesive layer (35) is provided between the first conductive layer and the insulating layer, and/or between the insulating layer and the second conductive layer. The adhesive layer contains a solid joining agent containing, as a main component, an amorphous thermoplastic resin including at least one selected from a thermoplastic epoxy resin and a phenoxy resin. The amorphous thermoplastic resin has an epoxy equivalent of 1600 or more or is free of an epoxy group, and has a heat of fusion of 15 J/g or less.

## Description

### Technical Field

The present disclosure relates to a laminate and a method for manufacturing a laminate.

### Background Art

A power module (PM) mounted on a hybrid vehicle or the like includes a laminate (also referred to as a housing) of a resin molded article and a metal.

A known housing is manufactured by arranging a conductive layer and an insulating layer in a mold, injecting a resin into the mold, and molding the resin (hereinafter also referred to as insert molding) (see PTL 1).

### Citation List

### Patent Literature

PTL 1: JP 2021-122959 A

### Summary of Invention

### Technical Problem

Usually, a heat sink to which an element or the like is brazed is adhered to a housing used in the PM.

From the viewpoint of improving the manufacturing efficiency, it is desirable to perform adhesion of the heat sink to the housing and the adhesion of the element or the like to the heat sink simultaneously. However, heat is applied to the housing by the brazing of the element or the like to the heat sink.

The present inventors have found that, since the conductive layer is buried in the resin layer in the housing manufactured by the known insert molding disclosed in PTL 1, internal stress caused by a difference in linear expansion coefficient between the conductive layer and the resin layer cannot be sufficiently relaxed when the laminate is left in a high-temperature environment, heated, or the like; that occurrence of cracks, deformation of the conductive layer and the resin layer, or the like is caused; and that there is room for improvement in thermal durability thereof.

An issue to be solved by an embodiment of the present disclosure is to provide a laminate having excellent thermal durability and a method for manufacturing a laminate.

### Solution to Problem

<1> A laminate including, in this order:
   a first resin layer;
   a first conductive layer;
   an insulating layer; and
   a second conductive layer,
   the first resin layer including an accommodation portion, and
   the first conductive layer being disposed in the accommodation portion of the first resin layer, wherein between the first conductive layer and the insulating layer, and/or between the insulating layer and the second conductive layer, an adhesive layer is provided, the adhesive layer containing a solid joining agent containing, as a main component, an amorphous thermoplastic resin which includes at least one selected from a thermoplastic epoxy resin and a phenoxy resin, the amorphous thermoplastic resin having an epoxy equivalent of 1600 or more or being free of an epoxy group, and the amorphous thermoplastic resin having a heat of fusion of 15 J/g or less.
<2> The laminate according to <1>, wherein the accommodation portion includes a concave portion or an uneven portion.
<3> The laminate according to <1>, wherein the first conductive layer, the insulating layer, and the second conductive layer are disposed in the accommodation portion of the first resin layer.
<4> The laminate according to <1> or <2>, wherein an area of the accommodation portion included in the first resin layer is equal to or larger than an area of the first conductive layer.
<5> The laminate according to any one of <1> to <4>, further including a second resin layer on the second conductive layer opposite side from the insulating layer, and
optionally including the adhesive layer between the first resin layer and the first conductive layer, and/or between the second conductive layer and the second resin layer.
<6> The laminate according to any one of <1> to <5,> wherein the first resin layer is a cured product of a resin composition containing a thermosetting resin.
<7> The laminate according to <6>, wherein the thermosetting resin contains an unsaturated polyester.
<8> The laminate according to any one of <1> to <7>, wherein the first resin layer includes a fixation portion that fixes the first conductive layer, the insulating layer, and the second conductive layer.
<9> A method for manufacturing a laminate, the method including:
   a pre-joining step of preparing a laminate in which a first resin layer including an accommodation portion, a first conductive layer disposed in the accommodation portion of the first resin layer, an insulating layer, and a second conductive layer are disposed in this order, the pre-joining step including disposing a solid joining agent between the first conductive layer and the insulating layer, and/or between the insulating layer and the second conductive layer, the solid joining agent containing, as a main component, an amorphous thermoplastic resin which includes at least one selected from a thermoplastic epoxy resin and a phenoxy resin; and
   a joining step of joining the first conductive layer to the insulating layer and/or joining the insulating layer to the second conductive layer by heating and pressurizing the laminate to melt the solid joining agent,
   wherein the amorphous thermoplastic resin has an epoxy equivalent of 1600 or more or is free of an epoxy group, and a heat of fusion of the amorphous thermoplastic resin is 15 J/g or less.
<10> The method for manufacturing a laminate according to <9>, wherein the heating and pressurization are performed under conditions of from 100°C to 400°C and from 0.01 MPa to 20 MPa.
<11> The method for manufacturing a laminate according to <9> or <10>, wherein the solid joining agent before melting has a shape selected from the group consisting of a film, a rod, a pellet, and a powder.

### Advantageous Effects of Invention

An embodiment of the present disclosure can provide a laminate excellent in thermal durability and a method for manufacturing a laminate.

### Brief Description of Drawings

[Fig. 1] Fig. 1 is a perspective view illustrating an embodiment of a laminate of the present disclosure.
[Fig. 2] Fig. 2 is a perspective view illustrating another embodiment of the laminate of the present disclosure.
[Fig. 3] Fig. 3 is a perspective view illustrating an embodiment of the laminate of the present disclosure.
[Fig. 4] Fig. 4 is a cross-sectional view illustrating another embodiment of the laminate of the present disclosure.
[Fig. 5] Fig. 5 is a cross-sectional view illustrating another embodiment of the laminate of the present disclosure.
[Fig. 6] Fig. 6 is a perspective view illustrating an embodiment of a first resin layer included in the laminate of the present disclosure.
[Fig. 7] Fig. 7 is a perspective view illustrating an embodiment of the first resin layer included in the laminate of the present disclosure.
[Fig. 8] Fig. 8 is a perspective view illustrating another embodiment of the laminate of the present disclosure.
[Fig. 9] Fig. 9 is a schematic cross-sectional view of a state in which a first member and a second member are joined to each other via an adhesive layer containing a solid joining agent.

### Description of Embodiments

Hereinafter, embodiments for carrying out the present disclosure will be described in detail. However, the present disclosure is not limited to the following embodiments. In the following embodiments, the constituent elements (including element steps and the like) are not essential unless otherwise specified. The same applies to numerical values and ranges thereof, and the present disclosure is not limited thereto.

In the present disclosure, the term "step" includes not only a step independent of other steps but also a step that cannot be clearly distinguished from other steps as long as the purpose of the step is achieved. In the present disclosure, numerical ranges indicated using "to" include numerical values described before and after "to" as a minimum value and a maximum value, respectively. In numerical ranges described stepwise in the present disclosure, an upper or lower limit described in one numerical range may be replaced by an upper or lower limit of another numerical range described stepwise.

Also, in a numerical range described in the present disclosure, an upper or lower limit of the numerical range may be replaced by values presented in Examples.

In the present disclosure, each component may contain a plurality of corresponding substances. When a plurality of substances corresponding to each component are present in a composition, the content rate or content of each component means the total content rate or content of the plurality of substances present in the composition unless otherwise specified.

In the present disclosure, when a region in which a layer is present is observed, the term "layer" includes not only a case where the layer is formed in the entire region but also a case where the layer is formed only in a part of the region.

When an embodiment is described with reference to the drawings in the present disclosure, the configuration of the embodiment is not limited to the configurations illustrated in the drawings. In addition, the sizes of the members in the drawings are conceptual, and the relative relationship in size among the members is not limited thereto.

In the present disclosure, joining means joining objects to each other, and adhesion and welding are subordinate concepts thereof. Adhesion means that two adherends (objects to be adhered) are brought into a joined state via an organic material (curable resin, thermoplastic resin, or the like) such as a tape or an adhesive. Welding means that a surface of a thermoplastic resin or the like is molten by heat, and that entanglement and crystallization due to molecular diffusion occurring in the process of performing contact pressurization and cooling, or joining using intermolecular interaction with a base material occurring at the time of melting.

### Laminate

The laminate of the present disclosure includes a first resin layer, a first conductive layer, an insulating layer, and a second conductive layer in this order. The first resin layer includes an accommodation portion, and the first conductive layer is disposed in the accommodation portion of the first resin layer.

The laminate of the present disclosure is excellent in thermal durability. The reason why the above-mentioned effect is exhibited is not clear, but is presumed as follows.

The laminate of the present disclosure can be produced not by insert molding but by separately producing the respective layers and laminating the layers. Therefore, in the laminate manufactured by insert molding, the first conductive layer is embedded in the first resin layer and is completely in close contact with the first resin layer, whereas in the laminate of the present disclosure, the first resin layer includes the accommodation portion, and thus the first resin layer and the first conductive layer are not completely in close contact with each other, thereby making it possible to relax internal stress generated during heating. As a result, it is presumed that occurrence of cracks and deformation of the conductive layer and the resin layer can be suppressed, and that thermal durability is improved.

In addition, it is difficult to form the first resin layer including the accommodation portion by insert molding, and it is presumed that the thermal durability is thus improved.

The laminate of the present disclosure may further include a second resin layer on the second conductive layer opposite side from the insulating layer.

The laminate of the present disclosure includes an adhesive layer between the first conductive layer and the insulating layer, and/or between the insulating layer and the second conductive layer, and may further optionally include an adhesive layer between the first resin layer and the first conductive layer, and/or between the second conductive layer and the second resin layer. From the viewpoint of thermal durability, the adhesive layer is preferably disposed in the accommodation portion of the first resin layer.

The laminate of the present disclosure may include a heat sink on a surface of the first conductive layer on the first resin layer side or a surface of the second conductive layer on the second resin layer side.

From the viewpoint of thermal durability, the heat sink is preferably disposed in the accommodation portion of the first resin layer.

### First Resin Layer

The first resin layer includes an accommodation portion, and the first conductive layer is disposed in the accommodation portion.

From the viewpoint of thermal durability, the accommodation portion preferably includes a concave portion or an uneven portion.

The accommodation portion including an uneven portion means that the accommodation portion includes a concave portion and a convex portion. The concave portion may be stepped.

From the viewpoint of thermal durability, the first conductive layer, the insulating layer, and the second conductive layer are preferably disposed in the accommodation portion of the first resin layer.

When the accommodation portion includes a stepped concave portion, the first conductive layer, the insulating layer, and the second conductive layer may be accommodated in the same level layer or in different level layers.

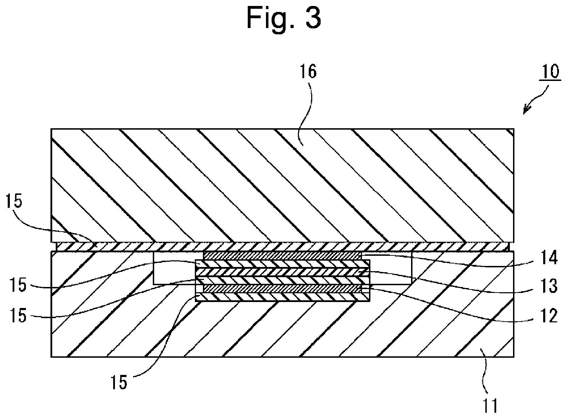

Figs. 3 to 5 illustrate aspects in which the first conductive layer, the insulating layer, and the second conductive layer are accommodated in different level layers of the stepped concave portion.

In addition, the first resin layer may have one accommodation portion or may have two or more accommodation portions.

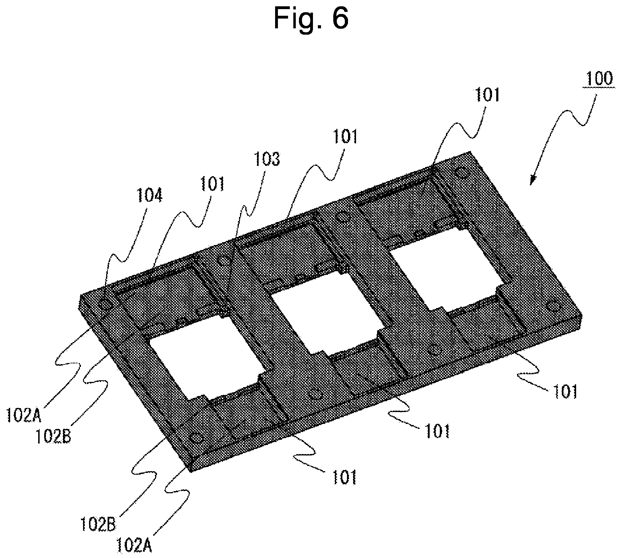

A first resin layer 100 illustrated in Fig. 6 has a plurality of accommodation portions 101.

Each accommodation portion 101 included in the first resin layer 100 illustrated in Fig. 6 includes a concave portion 102A and a convex portion 102B.

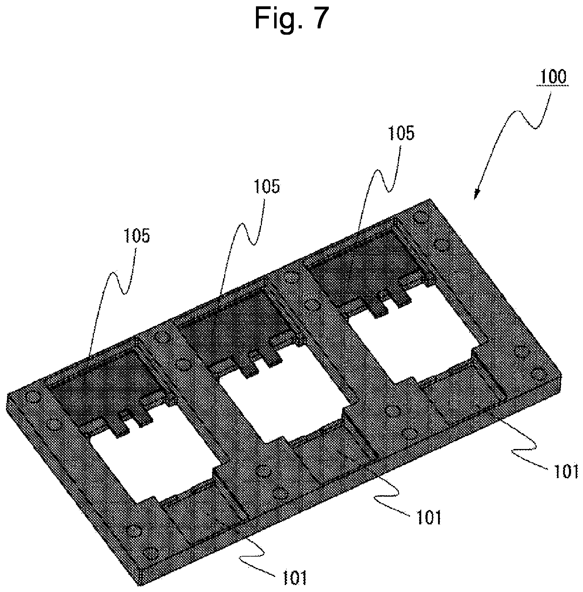

When the first resin layer includes a plurality of accommodation portions, a first conductive layer 105 may be disposed in some of the accommodation portions as illustrated in Fig. 7, or the first conductive layer 105 may be disposed in all of the accommodation portions.

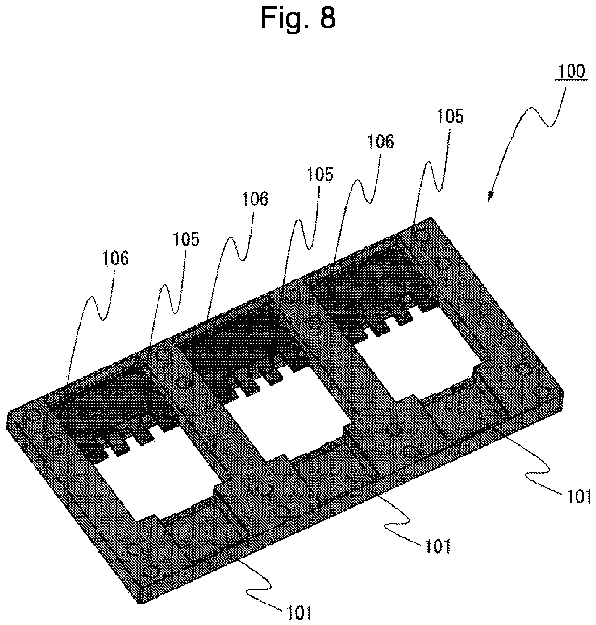

In addition, the insulating layer and the second conductive layer do not need to be laminated on the first conductive layers disposed in all of the accommodation portions, but may be laminated on all of the first conductive layers disposed in the accommodation portions as illustrated in Fig. 8. In Fig. 8, the insulating layer is not illustrated, and the second conductive layer is denoted by reference numeral 106.

An area of the accommodation portion included in the first resin layer is preferably equal to or larger than an area of the first conductive layer. A ratio of the area of the first conductive layer to the area of the accommodation portion of the first resin layer (area of first conductive layer/accommodation portion included in first resin layer) is preferably 1.01 or more. This configuration makes it possible to easily dispose the first conductive layer in the accommodation portion of the first resin layer. Further, the area ratio is preferably 2.00 or less. Accordingly, there is a tendency that occurrence of positional deviation of the first conductive layer on the first resin layer can be suppressed.

When the first resin layer includes an accommodation portion, the size thereof is preferably changed as appropriate depending on the size of the first conductive layer, the intended use of the laminate, and the like. The area of the accommodation portion can be, for example, from 1 cm² to 1000 cm².

A depth of the accommodation portion is preferably at least a thickness of the first conductive layer of the first conductive layer, more preferably equal to or more than a total thickness of the first conductive layer, the insulating layer and the second conductive layer, even more preferably equal to or more than a total thickness of the first conductive layer, the insulating layer, the second conductive layer, and the adhesive layer, and particularly preferably equal to or more than a total thickness of the first conductive layer, the insulating layer, the second conductive layer, the adhesive layer, and the heat sink. A thickness of the accommodation portion can be, for example, from 0.1 mm to 100 mm.

The depth of the accommodation portion may be less than the sum of the thicknesses of the first conductive layer, the insulating layer, the second conductive layer, the adhesive layer, and the heat sink.

From the viewpoint of thermal durability, the first resin layer is preferably a cured product of a resin composition containing a thermosetting resin.

The kind of the thermosetting resin is not particularly limited, and may be a resin having, in one molecule, one or more functional groups which can be utilized in a crosslinking reaction by heating. Examples of the functional group include an epoxy group, an acryloyl group, a methacryloyl group, a hydroxy group, a vinyl group, a carboxy group, an amino group, a maleimide group, an acid anhydride group, a thiol group, a thionyl group, an amide group, and an imide group.

Examples of the thermosetting resin include a phenol resin, an unsaturated imide resin, a cyanate resin, an isocyanate resin, a benzoxazine resin, an oxetane resin, an amino resin, an unsaturated polyester resin, an acrylic resin, a dicyclopentadiene resin, a silicone resin, a triazine resin, a melamine resin, a resorcinol resin, and an epoxy resin. Among the above ones, containing one or more selected from unsaturated polyesters and phenol resins is preferred, and containing an unsaturated polyester is more preferred, from the viewpoint of thermal durability. The resin composition may contain one kind of thermosetting resin alone or two or more kinds of thermosetting resins.

The unsaturated polyester can be obtained by polycondensation (esterification) of a polyhydric alcohol with an unsaturated polybasic acid, a saturated polybasic acid, or the like.

The polyhydric alcohol is not particularly limited, and a known polyhydric alcohol can be used. Examples of the polyhydric alcohol include ethylene glycol, propylene glycol, butanediol, diethylene glycol, dipropylene glycol, triethylene glycol, pentanediol, hexanediol, neopentanediol, hydrogenated bisphenol A, bisphenol A, and glycerin. These may be used alone, or two or more thereof may be used in combination.

The unsaturated polybasic acid is not particularly limited, and a known unsaturated polybasic acid can be used. Examples of the unsaturated polybasic acid include maleic anhydride, fumaric acid, citraconic acid, and itaconic acid. These unsaturated polybasic acids may be used alone, or two or more thereof may be used in combination.

The saturated polybasic acid is not particularly limited, and a known saturated polybasic acid can be used. Examples of the saturated polybasic acid include phthalic anhydride, isophthalic acid, terephthalic acid, HET acid, succinic acid, adipic acid, sebacic acid, tetrachlorophthalic anhydride, tetrabromophthalic anhydride, and endomethylenetetrahydrophthalic anhydride. These saturated polybasic acids may be used alone, or two or more thereof may be used in combination.

As the unsaturated polyester, an unsaturated polyester synthesized by a known method using the above-mentioned raw materials may be used, or a commercially available unsaturated polyester may be used.

The unsaturated polyester can be obtained by polycondensing a polyhydric alcohol with an unsaturated polybasic acid, a saturated polybasic acid, or the like at a temperature of from 140°C to 230°C in an inert gas atmosphere such as nitrogen. The polycondensation reaction may be carried out under pressurized conditions or under reduced pressure conditions.

In the polycondensation reaction, a crosslinking agent and a catalyst may be used if necessary. Examples of the crosslinking agent include a styrene monomer, a diallyl phthalate monomer, a diallyl phthalate prepolymer, methyl methacrylate, and triallyl isocyanurate. These crosslinking agents may be used alone, or two or more thereof may be used in combination.

Examples of the catalyst include manganese acetate, dibutyltin oxide, stannous oxalate, zinc acetate, and cobalt acetate. These catalysts may be used alone, or two or more thereof may be used in combination.

From the viewpoint of thermal durability, a number average molecular weight of the thermosetting resin is preferably from 1000 to 10000, and more preferably from 1500 to 5000. In the present disclosure, the number average molecular weight is a weight average molecular weight in terms of polystyrene as measured by a gel permeation chromatography (GPC) method.

From the viewpoint of thermal durability, a content rate of the thermosetting resin with respect to a total mass of the resin composition is preferably from 10 mass% to 60 mass%, more preferably from 20 mass% to 50 mass%, and even more preferably from 20 mass% to 40 mass%.

The resin composition may contain a thermoplastic resin, an elastomer, and the like.

Specific examples of the thermoplastic resin include a polyimide resin, a polyamide-imide resin, a polyamide resin, a polyetherimide resin, a polybenzoxazole resin, a polybenzimidazole resin, a polystyrene resin, an acrylonitrile-butadiene-styrene copolymer resin, an acrylonitrile-styrene copolymer resin, a polyethylene resin, a polypropylene resin, a polyvinyl chloride resin, a polyvinylidene chloride resin, a polycarbonate resin, a (meth)acrylic resin, a polyester resin, a polyacetal resin, and a polyphenylene sulfide resin (PPS).

Specific examples of the elastomer include silicone rubber, styrene butadiene rubber (SBR), nitrile rubber (NBR), and urethane rubber.

The resin composition may contain various additives such as a curing agent, a curing accelerator, a filler, a mold release agent, a flame retardant, a colorant, a plasticizer, a silane coupling agent, a rust inhibitor, a copper inhibitor, a reducing agent, an antioxidant, a tackifier resin, an ultraviolet absorber, an antifoaming agent, a leveling agent, and a solvent.

The first resin layer may include a fixation portion that fixes the first conductive layer, the insulating layer, and the second conductive layer. When the first resin layer includes the fixation portion, it tends to be possible to suppress occurrence of positional deviation of the first conductive layer, the insulating layer, and the second conductive layer on the first resin layer.

The first resin layer and the second resin layer may include either one of an insertion portion or an opening portion.

When the first resin layer includes either one of the insertion portion or the opening portion, and the second resin layer includes at least the other, the first resin layer and the second resin layer can be fitted to each other by inserting the insertion portion into the opening portion.

### First Conductive Layer and Second Conductive Layer

The first conductive layer and the second conductive layer may include at least one of a metal or a metal oxide.

Examples of the metal include silver, gold, copper, palladium, platinum, titanium, chromium, nickel, aluminum, zirconium, tungsten, vanadium, rhodium, iridium, and alloys thereof.

Examples of the metal oxide include zinc oxide (ZnO), tin oxide (SnO₂), indium tin oxide (ITO), aluminum oxide (Al₂O₃), and titanium oxide (TiO₂).

From the viewpoint of conductivity, average thicknesses of the first conductive layer and the second conductive layer can be appropriately set depending on the intended use or the like. In consideration of ease of arrangement in the concave portion or the uneven portion included in the first resin layer, the average thicknesses are preferably from 0.1 mm to 10 mm.

In the present disclosure, the average thicknesses are average values of thicknesses measured at two points of the layers by a measuring instrument.

The materials included in the first conductive layer and the second conductive layer, the average thickness of the layers, and the like may be the same or different.

### Insulating Layer

The insulating layer is preferably a cured product of a resin composition containing an insulating resin.

Examples of the insulating resin include curable resins such as a thermoplastic resin, a thermosetting resin, and a photocurable resin.

The photocurable resin may be a resin having, in one molecule, one or more unsaturated bonds capable of undergoing a crosslinking reaction by light. Specific examples of the photocurable resin include an acrylic resin, a urethane resin, a polyester resin, a polyether resin, an epoxy resin, a polybutadiene resin, a polyimide resin, a polyamide resin, a silicone resin, and a fluororesin.

Since the thermoplastic resin and the thermosetting resin have been described above, the descriptions thereof are omitted here.

The resin composition may contain various additives such as a curing agent, a curing accelerator, a photopolymerization initiator, a filler, a mold release agent, a flame retardant, a colorant, a plasticizer, a silane coupling agent, a rust inhibitor, a copper inhibitor, a reducing agent, an antioxidant, a tackifier resin, an ultraviolet absorber, an antifoaming agent, a leveling agent, and a solvent.

From the viewpoint of insulation properties, an average thickness of the insulating layer can be appropriately set depending on the intended use or the like. In consideration of ease of arrangement in the concave portion or the uneven portion included in the first resin layer, the average thickness is preferably from 0.01 mm to 10 mm.

### Second Resin Layer

The laminate of the present disclosure may further include a second resin layer on the second conductive layer opposite side from the insulating layer. Due to the presence of the second resin layer, positional deviation of the first conductive layer, the insulating layer, and the second conductive layer on the first resin layer can be suppressed.

The second resin layer may include a concave portion, a convex portion, or an uneven portion. The concave portion, the convex portion, or the uneven portion provided in the second resin layer may correspond to a shape of the second conductive layer. Due to the concave portion of the second resin layer and the shape of the second conductive layer corresponding to each other, the position of the second conductive layer can be fixed by the second resin layer.

For example, when the sum of the thicknesses of the first conductive layer, the insulating layer, and the second conductive layer is larger than the depth of the concave portion of the first resin layer, a concave portion corresponding to the shape of the second conductive layer may be provided in the second resin layer. In this case, an area of the concave portion of the second resin layer is preferably equal to or larger than an area of the second conductive layer.

Further, when the total thickness of the first conductive layer, the insulating layer, and the second conductive layer is smaller than the depth of the concave portion of the first resin layer, the second resin layer may be provided with a convex portion at a position corresponding to the second conductive layer. The number of the convex portions may be one or two or more.

The second resin layer is preferably a cured product of a resin composition containing a thermosetting resin. The thermosetting resin and the resin composition have been described above, the descriptions thereof are omitted here.

The second resin layer may include a fixation portion that fixes the first conductive layer, the insulating layer, and the second conductive layer. When the second resin layer includes the fixation portion, it tends to be possible to suppress occurrence of positional deviation of the first conductive layer, the insulating layer, and the second conductive layer on the first resin layer.

### Adhesive Layer

The laminate of the present disclosure includes an adhesive layer between the first conductive layer and the insulating layer, between the insulating layer and the second conductive layer, between the first resin layer and the first conductive layer, and/or between the second conductive layer and the second resin layer.

The first resin layer and the second resin layer may be adhered to each other by adjusting the size of the adhesive layer provided between any two of the layers.

The adhesive layer may include an intermediate layer of an insulator. In this case, the adhesive layer is preferably composed of three layers, i.e., a joining material, an intermediate layer, and a joining material from the viewpoint of adhesiveness and insulation properties. Due to inclusion of the intermediate layer of an insulator, defects such as insulating pinholes are less likely to occur, and the insulation properties can be improved.

Examples of the resin for the intermediate layer include a polyimide resin, a polyamide-imide resin, a polyamide resin, a polyetherimide resin, a polybenzoxazole resin, a polybenzimidazole resin, a polystyrene resin, an acrylonitrile-butadiene-styrene copolymer resin, an acrylonitrile-styrene copolymer resin, a polyethylene resin, a polypropylene resin, a polyvinyl chloride resin, a polyvinylidene chloride resin, a polycarbonate resin, a (meth)acrylic resin, a polyester resin, a polyacetal resin, a polyphenylene sulfide resin (PPS), and a phenol resin.

The adhesive layer includes a solid joining agent. Thus, when the first conductive layer, the adhesive layer, the insulating layer, and the like are laminated on the surface of the first resin layer, a change in thickness of the adhesive layer can be suppressed, and changes in distance between the first conductive layer and the insulating layer, distance between the first conductive layer and the second conductive layer, distance between the second conductive layer and the insulating layer, and the like can be suppressed.

### Solid Joining Agent

The solid joining agent contains, as a main component, an amorphous thermoplastic resin which includes at least one selected from a thermoplastic epoxy resin and a phenoxy resin. The amorphous thermoplastic resin has an epoxy equivalent of 1600 or more or is free of an epoxy group, and a heat of fusion of the amorphous thermoplastic resin is 15 J/g or less.

"Solid" of the solid joining agent means that it is solid at room temperature, that is, it does not have fluidity at 23°C without pressurization. It is desirable that the solid joining agent is capable of retaining its outer shape without deformation for 30 days or longer under a non-pressurized state at 23°C, and further has a property of not deteriorating.

The "main component" means a component having the highest content among the resin components in the solid joining agent and having a content of 50 mass% or more in the resin components in the solid joining agent. The solid joining agent contains the resin component in an amount of preferably 50 mass% or more, more preferably 70 mass% or more, even more preferably 80 mass% or more, and particularly preferably 90 mass% or more.

The amorphous resin in the present disclosure is a resin that has a melting point (Tm) but does not have a clear endothermic peak associated with fusion or has a very small endothermic peak in measurement using a differential scanning calorimeter (DSC). The heat of fusion is calculated from an area of the endothermic peak of DSC and a mass of the thermoplastic resin component. In a case where an inorganic filler or the like is contained in the solid joining agent, the heat of fusion is calculated from the mass of the resin component excluding the inorganic filler.

Specifically, the amorphous thermoplastic resin in the present disclosure means a resin having properties measured by the following procedures. From 2 to 10 mg of a sample is weighed, placed in an aluminum pan, and heated from 23°C to 200°C or higher at 10°C/min using a DSC (DSC8231 available from Rigaku Corporation) to obtain a DSC curve. Then, when the heat of fusion is calculated from the area of an endothermic peak at the time of fusion as determined from the DSC curve and the weighed value, those having a heat of fusion of 15 J/g or less are regarded as amorphous thermoplastic resins.

From the viewpoint of sufficiently imparting the properties of the amorphous thermoplastic resin to the solid joining agent, the content of the amorphous thermoplastic resin is preferably 60 mass% or more, more preferably 70 mass% or more, even more preferably 80 mass% or more, and most preferably 90 mass% or more of the resin component in the solid joining agent.

The heat of fusion is 15 J/g or less, preferably 11 J/g or less, more preferably 7 J/g or less, and even more preferably 4 J/g or less. Most preferably, the endothermic peak at the time of fusion is a detection limit or less.

The epoxy equivalent is 1600 or more, preferably 2000 or more, more preferably 5000 or more, and even more preferably 9000 or more. Most preferably, the epoxy equivalent is a detection limit or more and the epoxy group is not substantially detected.

When the solid joining agent is used, a rapid decrease in viscosity as found in a known hot melt adhesive does not occur during heating, and a low viscosity (from 0.001 to 100 Pa·s) state is not achieved even in a high temperature region exceeding 200°C. Accordingly, the solid joining agent does not flow out from the laminate even in a molten state, and the thickness of the adhesive layer can be stably secured, and a high adhesive force can be stably obtained.

The epoxy equivalent (mass of the resin containing 1 mol of an epoxy group) in the present disclosure is a value of the epoxy equivalent of the thermoplastic epoxy resin or the phenoxy resin component contained in the solid joining agent before joining, and is a value (in "g/eq.") as measured by the method defined in JIS K 7236:2001. Specifically, the epoxy equivalent of a resin is measured using a potentiometric titrator, using cyclohexanone as a solvent, adding a solution of tetraethylammonium bromide in acetic acid to the resin, and using 0.1 mol/L perchloric acid-acetic acid solution. With regard to a solvent-diluted product (resin varnish), the epoxy equivalent is calculated as a numerical value in terms of solid content based on a volatile component. The epoxy equivalent of a mixture of two or more resins can also be calculated from the content and the epoxy equivalent of each resin.

A melting point of the amorphous thermoplastic resin that is the main component of the solid joining agent is preferably from 50°C to 400°C, more preferably from 60°C to 350°C, and even more preferably from 70°C to 300°C. When the melting point is in a range of 50°C to 400°C, the solid joining agent is efficiently deformed and molten by heating and effectively wet-spreads on a joining surface, and thus a high adhesive force can be achieved. In the present disclosure, the melting point of the amorphous thermoplastic resin means a temperature at which the amorphous thermoplastic resin is substantially softened from a solid state, becomes thermoplastic, and can be molten and adhered.

In a joined body containing a known thermosetting adhesive, it is difficult to disassemble the joined body, and it is difficult to separate different materials constituting the joined body for recycling (that is, poor in recyclability). In addition, in a case of using a thermosetting adhesive, it is difficult to re-attach (that is, poor in repairability) when a joined portion is displaced or the like in a production process of a joined body or when an adherend has a defect and needs to be replaced, resulting in lack of convenience. On the other hand, the solid joining agent can be softened and molten by heat and two adherends can be easily separated from each other, thereby providing excellent recyclability. In addition, the solid joining agent is thermoplastic, and thus, softening, melting, and curing (solidification) can be reversibly repeated, and the repairability is also excellent.

### Thermoplastic Epoxy Resin

The thermoplastic epoxy resin is preferably a polymer of (a) a bifunctional epoxy resin monomer or oligomer, and (b) a bifunctional compound having two identical or different functional groups selected from the group consisting of a phenolic hydroxyl group, a carboxyl group, a mercapto group, an isocyanate group, and a cyanate ester group. When such a compound is used, a polymerization reaction for forming a linear polymer preferentially proceeds, thereby allowing formation of a thermoplastic epoxy resin having desired properties.

The (a) bifunctional epoxy resin monomer or oligomer refers to an epoxy resin monomer or oligomer having two epoxy groups in the molecule. Examples of the (a) bifunctional epoxy resin monomer or oligomer include a bisphenol A-type epoxy resin, a bisphenol F-type epoxy resin, a bifunctional phenol novolak-type epoxy resin, a bisphenol AD-type epoxy resin, a biphenyl-type epoxy resin, a bifunctional naphthalene-type epoxy resin, a bifunctional alicyclic epoxy resin, a bifunctional glycidyl ester-type epoxy resin (e.g., diglycidyl phthalate, diglycidyl tetrahydrophthalate, dimer acid diglycidyl ester), a bifunctional glycidylamine-type epoxy resins (e.g., diglycidyl aniline, diglycidyl toluidine), a bifunctional heterocyclic epoxy resin, a bifunctional diarylsulfone-type epoxy resin, a hydroquinone-type epoxy resin (e.g., hydroquinone diglycidyl ether, 2,5-di-tert-butylhydroquinone diglycidyl ether, resorcinol diglycidyl ether), a bifunctional alkyleneglycidyl ether-based compound (e.g., butanediol diglycidyl ether, butenediol diglycidyl ether, butynediol diglycidyl ether), a bifunctional glycidyl group-containing hydantoin compound (e.g., 1,3-diglycidyl-5,5-dialkylhydantoin, 1-glycidyl-3-(glycidoxyalkyl)-5,5-dialkylhydantoin), a bifunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane), and modified products thereof. Among these, a bisphenol A-type epoxy resin, a bisphenol F-type epoxy resin, a bisphenol S-type epoxy resin, and a biphenyl-type epoxy resin are preferable in terms of reactivity and workability.

Examples of the (b) bifunctional compound having a phenolic hydroxyl group include mononuclear aromatic dihydroxy compounds having one benzene ring such as catechol, resorcinol, and hydroquinone; bisphenol compounds such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds having an allyl group such as diallylresorcinol, diallylbisphenol A and triallyldihydroxybiphenyl; and dibutylbisphenol A.

Examples of the (b) bifunctional compound having a carboxyl group include adipic acid, succinic acid, malonic acid, cyclohexanedicarboxylic acid, phthalic acid, isophthalic acid, and terephthalic acid.

Examples of the (b) bifunctional compound having a mercapto group include ethylene glycol bisthioglycolate and ethylene glycol bisthiopropionate.

Examples of the (b) bifunctional compound having an isocyanate group include diphenylmethane diisocyanate (MDI), isophorone diisocyanate (IPDI), hexamethylene diisocyanate (HMDI), and tolylene diisocyanate (TDI).

Examples of the (b) bifunctional compound having a cyanate ester group include 2,2-bis(4-cyanatophenyl)propane, 1,1-bis(4-cyanatophenyl)ethane, and bis(4-cyanatophenyl)methane.

Among the (b) described above, a bifunctional compound having a phenolic hydroxyl group is preferable because it can form a thermoplastic polymer having suitable properties, a bifunctional compound having two phenolic hydroxyl groups and having a bisphenol structure or a biphenyl structure is preferable from the viewpoint of heat resistance and adhesiveness, and bisphenol A, bisphenol F, and bisphenol S are preferable from the viewpoint of heat resistance and cost.

In a case where the (a) is a bisphenol A-type epoxy resin, a bisphenol F-type epoxy resin, a bisphenol S-type epoxy resin, or a biphenyl-type epoxy resin, and the (b) is bisphenol A, bisphenol F, or bisphenol S, the polymer produced by polymerization of the (a) and (b) has a structure in which a main chain has a paraphenylene structure and an ether bond as a main skeleton, the paraphenylene structure and the ether bond being linked by an alkylene group, and a hydroxyl group generated by polyaddition is arranged in a side chain. A linear structure derived from the main skeleton having the paraphenylene structure and the ether bond can enhance the mechanical strength of the polymer after polymerization, and the hydroxyl group arranged in the side chain can improve the adhesion to the base material. As a result, high adhesive strength at the same level as that of a thermosetting resin can be realized while maintaining workability. Furthermore, by softening and melting with heat, recycling and repairing become possible, and recyclability and repairability which are issues in thermosetting resin can be improved.

### Phenoxy Resin

The phenoxy resin is a polyhydroxy polyether synthesized from a bisphenol compound and epichlorohydrin, and has thermoplasticity. As a method for manufacturing the phenoxy resin, there are known a method of directly reacting a dihydric phenol compound with epichlorohydrin and a method of subjecting a diglycidyl ether of a dihydric phenol compound and a dihydric phenol compound to an addition polymerization reaction, and the phenoxy resin may be obtained by any of these manufacturing methods. In the case of a direct reaction between a dihydric phenol compound and epichlorohydrin, examples of the dihydric phenol compound include phenol compounds such as bisphenol A, bisphenol F, bisphenol S, biphenol, biphenylene diol, and fluorene diphenyl. Among these, bisphenol A, bisphenol F, and bisphenol S are preferable from the viewpoints of cost, adhesiveness, viscosity, and heat resistance. In addition to the dihydric phenol compound, an aliphatic glycol such as ethylene glycol, propylene glycol, or diethylene glycol may be included in the direct reaction. These aliphatic glycols may be used alone, or two or more thereof may be used in combination. The phenoxy resin has a chemical structure similar to that of an epoxy resin, and has a structure in which a main skeleton has a paraphenylene structure and an ether bond as a main skeleton, the paraphenylene structure and the ether bond being linked, and a hydroxyl group is arranged in a side chain.

### Thermoplastic Epoxy Resin and Phenoxy Resin

Weight average molecular weights of the thermoplastic epoxy resin and the phenoxy resin are each preferably from 10000 to 500000, more preferably from 18000 to 300000, and even more preferably from 20000 to 200000 as a value in terms of polystyrene as measured by gel permeation chromatography (GPC). The weight average molecular weight is a value in terms of standard polystyrene as calculated from an elution peak position detected by GPC. When the weight average molecular weight is in the above range, thermoplasticity and heat resistance are well balanced, thereby making it possible to efficiently form a joined body by melting and also to enhance heat resistance of the joined body. When the weight average molecular weight is 10000 or more, heat resistance is excellent, and when the weight average molecular weight is 500000 or less, viscosity at the time of melting is decreased and adhesiveness is increased.

### Method for Manufacturing Solid Joining Agent

A method for manufacturing the solid joining agent is not particularly limited. For example, the solid joining agent can be obtained by heating and polymerizing a monomer or an oligomer of a bifunctional epoxy compound. A solvent may be added to reduce viscosity during polymerization to facilitate stirring. In a case where a solvent is added, it is necessary to remove the solvent, and the solid joining agent may be produced by performing drying and/or polymerization on a release film or the like.

As needed, another additive may be blended in the solid joining agent as long as the effects of the present invention are not impaired. A blending amount of the additive with respect to the total amount of the amorphous thermoplastic resin is preferably 50 vol.% or less, more preferably 30 vol.% or less, even more preferably 20 vol.% or less, and most preferably 10 vol.% or less. In the present disclosure, the vol.% of the additive represents a volume ratio of the additive contained before the polymerization of the monomer or oligomer of the bifunctional epoxy compound based on the volume of the total amount of the amorphous thermoplastic resin, and the volume of the additive can be determined by dividing the mass of the contained additive by the true specific gravity of the additive.

Examples of the additive include a viscosity modifier, an inorganic filler, an organic filler (resin powder), an antifoaming agent, a coupling agent such as a silane coupling agent, and a pigment. These additives may be used alone, or two or more thereof may be used in combination. Examples of the viscosity modifier include a reactive diluent. Examples of the inorganic filler include spherical molten silica, metal powders of metals such as iron, silica sand, talc, calcium carbonate, mica, acid clay, diatomaceous earth, kaolin, quartz, titanium oxide, silica, phenol resin microballoon, and glass balloon.

The solid joining agent thus obtained has a low content of unreacted monomers or terminal epoxy groups or substantially no unreacted monomer or terminal epoxy group. Thus, the solid joining agent is excellent in storage stability and can be stored for a long period of time at room temperature.

The form of the solid joining agent before melting is not particularly limited, and preferably has a shape selected from the group consisting of a film, a rod, a pellet, and a powder. At least one side of the outer shape of the solid joining agent is preferably 5 mm or less, more preferably 3 mm or less, even more preferably 1 mm or less, particularly preferably 0.5 mm or less, and most preferably 0.3 mm or less. By sandwiching the solid joining agent having at least one side of the outer shape of 5 mm or less between the first member and the second member, and heating and pressuring them, the solid joining agent is efficiently spread on the adhesive surface, and thus a high adhesive force can be obtained.

The solid joining agent before melting more preferably has a film shape. The film-shaped solid joining agent can join the metal members while reliably retaining the members to be joined at a predetermined interval over the entire joining surface. Therefore, the film-shaped solid joining agent is particularly advantageous from the viewpoint of dimensional stability of the laminate. The film-shaped solid joining agent has a thickness of preferably from 10 µm to 5 mm, more preferably from 20 µm to 3 mm, and even more preferably from 30 µm to 0.5 mm. By setting the thickness of the film-shaped solid joining agent to 10 µm or more, electrolytic corrosion between the first member and the second member can be more reliably prevented, and the adhesive force can be ensured. Due to the film-shaped solid joining agent having a thickness of 5 mm or less, the adhesive force of the joining surface in a shear direction can be increased.

The solid joining agent may have tackiness within a range where neither the adhesive force nor the heat resistance is impaired. In this case, the solid joining agent can be temporarily fixed to the base material in a laminate preparation step.

From the viewpoint of adhesiveness, an average thickness of the adhesive layer is preferably from 1 µm to 5000 µm, more preferably from 20 µm to 1000 µm, and even more preferably from 50 µm to 800 µm.

### Heat Sink

The laminate of the present disclosure may include a heat sink on a surface of the first conductive layer on the first resin layer side or a surface of the second conductive layer on the second resin layer side.

As the heat sink, a known heat sink can be used, and an element or the like may be adhered thereto.

### Intended Use

The laminate of the present disclosure can be suitably used for producing a power module (PM).

The intended use of the laminate of the present disclosure is not limited to the intended use of PM, and the laminate can be used in other electrical components, control components, drive components, weak electrical components, home appliances, decorative components, and the like.

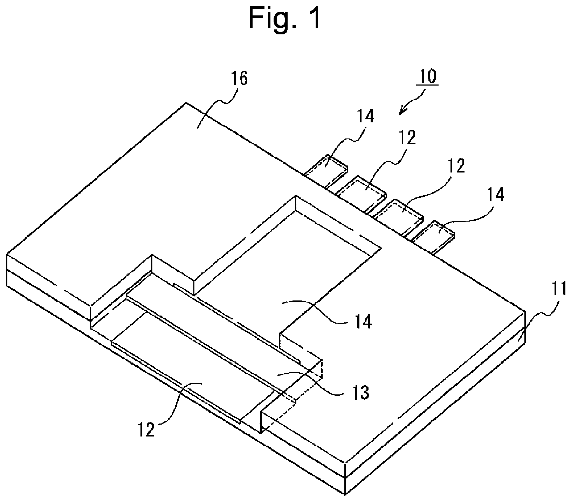

Hereinafter, an embodiment of the laminate or the like of the present disclosure will be described with reference to Figs. 1 to 6. The disclosed laminate is not limited to the forms illustrated in Figs. 1 to 6.

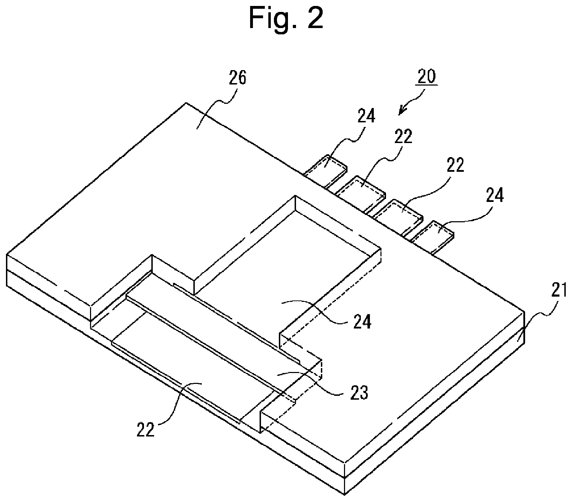

Fig. 1 is a perspective view illustrating an embodiment of the laminate of the present disclosure, and Fig. 2 is a perspective view illustrating another embodiment of the laminate of the present disclosure.

In Figs. 1 and 2, the adhesive layer between the layers is not illustrated.

A laminate 10 illustrated in Fig. 1 includes a first resin layer 11, a first conductive layer 12, an insulating layer 13, a second conductive layer 14, and a second resin layer 16 in this order.

A laminate 20 illustrated in Fig. 2 includes a first resin layer 21, a first conductive layer 22, an insulating layer 23, a second conductive layer 24, and a second resin layer 26 in this order.

As illustrated in Figs. 1 and 2, the second resin layer may have an opening. Thus, a heat sink or the like can be disposed on a surface of the second conductive layer or the like. The shape of the opening is not particularly limited, and is preferably adjusted as appropriate depending on the intended use.

As illustrated in Figs. 1 and 2, the first conductive layer and the second conductive layer may protrude outward from outer peripheries of the first resin layer and the second resin layer. As a result, they can be connected to another member such as a wiring.

Fig. 3 is a cross-sectional view illustrating an embodiment of the laminate of the present disclosure.

A laminate 30 illustrated in Fig. 3 includes a first resin layer 31, an adhesive layer 35, a first conductive layer 32, an adhesive layer 35, an insulating layer 33, an adhesive layer 35, a second conductive layer 34, an adhesive layer 35, and a second resin layer 36.

As illustrated in Fig. 3, the first resin layer 31 includes an accommodation portion including a stepped concave portion, and the adhesive layer 35, the first conductive layer 32, the adhesive layer 35, the insulating layer 33, the adhesive layer 35, the second conductive layer 34, and the adhesive layer 35 are disposed in the accommodation portion.

In Fig. 3, the first conductive layer, the insulating layer and the second conductive layer are accommodated in different level layers of the stepped concave portion. This can improve thermal durability.

In the laminate 30 illustrated in Fig. 3, the first resin layer 31 and the second resin layer 36 are adhered to each other by the adhesive layer 35.

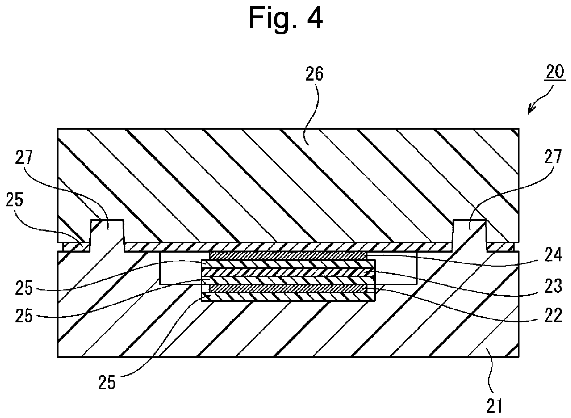

Fig. 4 is a cross-sectional view illustrating another embodiment of the laminate of the present disclosure.

A laminate 40 illustrated in Fig. 4 includes a first resin layer 41, an adhesive layer 45, a first conductive layer 42, an adhesive layer 45, an insulating layer 43, an adhesive layer 45, a second conductive layer 44, an adhesive layer 45, and a second resin layer 46.

As illustrated in Fig. 4, the first resin layer 41 includes an accommodation portion including a stepped concave portion, and the adhesive layer 45, the first conductive layer 42, the adhesive layer 45, the insulating layer 43, the adhesive layer 45, the second conductive layer 44, and the adhesive layer 45 are disposed in the accommodation portion.

In Fig. 4, the first conductive layer, the insulating layer and the second conductive layer are accommodated in different level layers of the stepped concave portion. This can improve thermal durability.

As illustrated in Fig. 4, the first resin layer 41 has an insertion portion 47, which is inserted into an opening portion (not illustrated) of the second resin layer 46.

In the laminate 40 illustrated in Fig. 4, the first resin layer 41 and the second resin layer 46 are adhered to each other by the adhesive layer 45.

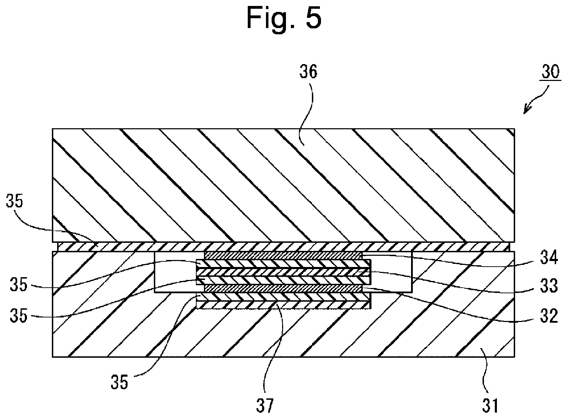

Fig. 5 is a cross-sectional view illustrating another embodiment of the laminate of the present disclosure.

A laminate 50 illustrated in Fig. 5 includes a first resin layer 51, a heat sink 57, an adhesive layer 55, a first conductive layer 52, an adhesive layer 55, an insulating layer 53, an adhesive layer 55, a second conductive layer 54, an adhesive layer 55, and a second resin layer 56.

As illustrated in Fig. 5, the first resin layer 51 includes an accommodation portion including a stepped concave portion, and the heat sink 57, the adhesive layer 55, the first conductive layer 52, the adhesive layer 55, the insulating layer 53, the adhesive layer 55, the second conductive layer 54, and the adhesive layer 55 are disposed in the accommodation portion.

In Fig. 5, the first conductive layer, the insulating layer and the second conductive layer are accommodated in different level layers of the stepped concave portion. This can improve thermal durability.

In the laminate 50 illustrated in Fig. 5, the first resin layer 51 and the second resin layer 56 are adhered to each other by the adhesive layer 55.

Fig. 6 is a perspective view illustrating an embodiment of the first resin layer included in the laminate of the present disclosure.

As illustrated in Fig. 6, the first resin layer 100 has a plurality of accommodation portions 101, and the accommodation portions 101 include concave portions 102A and convex portions 102B. The first resin layer 100 includes a fixation portion 103 and an opening portion 104.

As illustrated in Fig. 6, the first resin layer 100 may have an opening between the accommodation portions 101. Thus, another member such as a wiring can be connected to the first resin layer and the like disposed in the first resin layer 100.

As illustrated in Figs. 3 to 6, the outer peripheries of the adhesive layer, the first conductive layer, the insulating layer, and the second conductive layer may have different sizes. When the adhesive layer, the first conductive layer, the insulating layer, and the second conductive layer have different outer peripheries, the inner periphery of the concave portion of the first resin layer is preferably equal to or larger than the outer periphery of the layer having the largest outer periphery among the adhesive layer, the first conductive layer, the insulating layer, and the second conductive layer.

### Method for Manufacturing Laminate

The method for manufacturing a laminate of the present disclosure includes:
a preparing step of preparing a first resin layer having an accommodation portion on at least one surface thereof; and
a lamination step of laminating a first conductive layer, an insulating layer, and a second conductive layer on a surface of the first resin layer.

In the lamination step, at least the first conductive layer is disposed in the accommodation portion of the first resin layer.

According to the method for manufacturing a laminate of the present disclosure, a laminate excellent in thermal durability can be manufactured. The reason why the above-mentioned effect is exhibited is not clear, but is presumed as follows.

In the method for manufacturing a laminate of the present disclosure, the laminate is manufactured not by insert molding but by separately producing the respective layers and laminating the layers. Therefore, in the laminate manufactured by insert molding, the first conductive layer is embedded in the first resin layer and is completely in close contact with the first resin layer, whereas in the laminate manufactured by the manufacturing method of the present disclosure, the first resin layer and the first conductive layer are not completely in close contact with each other, thereby making it possible to relax internal stress generated during heating. As a result, it is presumed that occurrence of cracks and deformation of the conductive layer and the resin layer can be suppressed, and that thermal durability is improved.

The method for manufacturing a laminate of the present disclosure may include a second lamination step of further laminating a second resin layer on the second conductive layer opposite side from the insulating layer.

### Preparation Step

Since the first resin layer has been described above, the description thereof is omitted here.

The method for producing the first resin layer is not particularly limited, and the first resin layer can be produced by insert molding or the like.

### Lamination Step

The method for manufacturing a laminate of the present disclosure includes a lamination step of laminating a first conductive layer, an insulating layer, and a second conductive layer on a surface of a first resin layer.

In the lamination step, at least the first conductive layer is disposed in the accommodation portion of the first resin layer. Preferably, the first insulating layer and the second conductive layer are disposed in the accommodation portion of the resin layer.

The lamination of the first conductive layer, the insulating layer, and the second conductive layer can be performed on the surface of the first resin layer by disposing an adhesive layer between the layers and heating them.

When the adhesive layer is disposed between the layers, the adhesive layer is preferably disposed in the accommodation portion of the first resin layer together with the first conductive layer, the insulating layer, and the second conductive layer in the lamination step.

In the lamination step, a heat sink may be disposed on the first conductive layer opposite side from the insulating layer, or on the second conductive layer opposite side from the insulating layer.

When the heat sink is disposed, the heat sink is preferably disposed in the accommodation portion of the first resin layer together with the first conductive layer, the insulating layer, and the second conductive layer in the lamination step.

Since the first conductive layer, the second conductive layer, the insulating layer, the adhesive layer, and the heat sink have been described above, the descriptions thereof are omitted here.

As the first conductive layer, the second conductive layer, the insulating layer, the adhesive layer, and the heat sink, those produced by known methods may be used, or commercially available ones may be used.

### Second Lamination Step

Since the second resin layer has been described above, the description thereof is omitted here.

The method for producing the second resin layer is not particularly limited, and the second resin layer can be produced by insert molding or the like.

The lamination of the second resin layer can be performed by disposing an adhesive layer between the second resin layer and the second conductive layer and heating them.

Alternatively, the first resin layer and the second resin layer may be adhered to each other with an adhesive layer.

When the first resin layer includes either one of the insertion portion or the opening portion, and the second resin layer includes at least the other, the first resin layer and the second resin layer can be fitted to each other by inserting the insertion portion into the opening portion.

The lamination step using the solid joining agent and the second lamination step will be described in more detail.

### Pre-Joining Step

In the pre-joining step, a laminate is formed in which the first member, the solid joining agent containing, as a main component, an amorphous thermoplastic resin which includes at least one selected from a thermoplastic epoxy resin and a phenoxy resin, and the second member are disposed in this order. In the laminate, neither the first member A and the solid joining agent nor the solid joining agent and the second member are joined to each other, and independent members are superposed on each other.

### Joining Step

In the joining step, the laminate is heated and pressurized to melt the solid joining agent, and then the temperature is lowered to solidify the solid joining agent, thereby joining the first member and the second member.

The temperature in the heating and pressurization is preferably from 100°C to 400°C, more preferably from 120°C to 350°C, and even more preferably from 150°C to 300°C. When heating is performed at from 100°C to 400°C, the solid joining agent is efficiently deformed and molten to effectively wet-spread on the joining surface, and thus a high adhesive force can be obtained.

The pressure in the heating and pressurization is preferably from 0.01 MPa to 20 MPa, more preferably from 0.1 MPa to 10 MPa, and even more preferably from 0.2 MPa to 5 MPa. The pressure here means an average pressure at the joining surfaces of the first member and the second member. When pressurization is performed at from 0.01 MPa to 20 MPa, the solid joining agent is efficiently deformed to effectively wet-spread on the joining surface, and thus a high adhesive force can be obtained. When at least one of the first member or the second member contains a thermoplastic resin at a joining surface thereof, the solid joining agent and the thermoplastic resin of the member can be made compatible with each other by pressurization at from 0.01 MPa to 20 MPa to obtain a high adhesive force.

The thermoplastic epoxy resin and the phenoxy resin, which are the main components of the solid joining agent, have a low cohesive force in the resin and have a hydroxyl group, and thus have strong interaction with the base material, and different materials can be joined with an adhesive force higher than that of a known crystalline hot melt adhesive.

The joining between the first member and the second member utilizes a phase change (solid-liquid-solid) of the solid joining agent and does not involve a chemical reaction, and thus the joining can be completed in a shorter time than that of a known thermosetting epoxy resin.

A high adhesive force may be obtained by subjecting the first member, the second member, or both to an appropriate pretreatment. As the pretreatment, a pretreatment for cleaning the surface of the base material or a pretreatment for forming unevennesses on the surface is preferable. Only one pretreatment may be performed, or two or more pretreatments may be performed. As a specific method of the pretreatment, a known method can be used.

Specifically, when the material for the member is metal, at least one selected from the group consisting of a degreasing treatment, a UV ozone treatment, a blasting treatment, a polishing treatment, a plasma treatment, and an etching treatment is preferable. When the material for the member is resin, at least one selected from the group consisting of a degreasing treatment, a UV ozone treatment, a blasting treatment, a polishing treatment, a plasma treatment, and a corona discharge treatment is preferable.

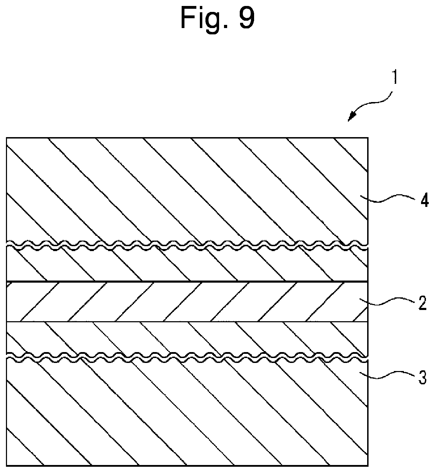

In a joined body 1 illustrated in Fig. 9, a first member 3 and a second member 4 are joined and integrated via an adhesive layer 2 in which the solid joining agent is molten and then solidified, and the joined body 1 of the first member 3 and the second member 4 exhibits excellent joining strength. The joining strength is affected by many factors such as the thickness of the adhesive layer, the molecular weight and chemical structure of the polymer constituting the adhesive, mechanical properties, and viscoelastic properties, in addition to the strength of interfacial interaction acting between the adhesive layer and the base material. Accordingly, although the details of the mechanism by which the joined body of the present disclosure exhibits excellent joining strength are not clear, it is presumed that the main factors are the low cohesive force of the amorphous thermoplastic resin constituting the adhesive layer and the presence of hydroxyl groups in the resin to form chemical bonds or intermolecular forces, such as hydrogen bonds and van der Waals forces, at the interface between the adhesive layer and the first member and at the interface between the adhesive layer and the second member. However, in the joined body, the state or property of the interface of the joined body is caused by an extremely thin chemical structure having a thickness of a nanometer level or less, and thus it is difficult to analyze the state or property. It is impossible or impractical in the current technology to distinguishably express the joined body and a joined body not containing the solid joining agent of the present disclosure by identifying the state or property of the interface of the joined body of the present disclosure.

The laminate of the present disclosure in which the adhesive layer contains an amorphous thermoplastic resin is excellent in recyclability and repairability. The laminate can be easily disassembled by heating the joined body to separate it into the first member and the second member, that is, to separate the first (second) conductive layer and the insulating layer from each other.

### Examples

Test Examples and Comparative Test Examples relating to the present invention will be described below, but the present invention is not limited thereto. In the following Examples, the first member and the second member are collectively referred to as a joining base material.

### Joining Base Material

The following joining base materials were used.

### PPS (Resin)

Polyphenylene sulfide (FZ-1130-D5, available from DIC Corporation) was injection-molded (resin temperature: 300°C, mold temperature: 140°C) to obtain an injection-molded product (longitudinal 45 mm × lateral 10 mm × thickness 3 mm). It was used without surface treatment.

### Copper

Copper (C1100 (tough pitch copper)) was degreased by wiping its surface with methyl ethyl ketone to obtain a test piece of 18 mm wide, 45 mm long and 3 mm thick.

### Weight Average Molecular Weights, Heat of Fusion, and Epoxy Equivalents of Thermoplastic Epoxy Resin and Phenoxy Resin

The weight average molecular weight, heat of fusion, and epoxy equivalent of each of the thermoplastic epoxy resin and the phenoxy resin were measured by the following procedures.

### Weight Average Molecular Weight

The thermoplastic epoxy resin and the phenoxy resin were each dissolved in tetrahydrofuran and measurement was performed using Prominence 501 (available from Showa Science Co., Ltd., Detector: Shodex (trade name) RI-501 (available from Showa Denko K.K.)) under the following conditions.
Column: LF-804 × 2 available from Showa Denko K.K.
Column temperature: 40°C
Sample: 0.4 mass% resin solution in tetrahydrofuran
Flow rate: 1 mL/min
Eluent: tetrahydrofuran
Calibration method: conversion by standard polystyrene

### Heat of Fusion

The thermoplastic epoxy resin and the phenoxy resin were weighed from 2 to 10 mg, placed in an aluminum pan, and heated from 23°C to 200°C at 10°C/min using a DSC (DSC8231 available from Rigaku Corporation) to obtain a DSC curve. The heat of fusion was calculated from an area of an endothermic peak at the time of melting in the obtained DSC curve and the weighed value.

### Epoxy Equivalent

A measured value obtained in accordance with JIS K 7236:2001 was converted into a value as a resin solid content. In a case of a simple mixture without reaction, it was calculated from the epoxy equivalent and content of each mixed component.

### Test Example 1

### Solid Joining Agent P-1

Into a reactor equipped with a stirrer, a reflux condenser, a gas inlet tube, and a thermometer, 203 g (1.0 equivalent) of jER (trade name) 1007 (available from Mitsubishi Chemical Corporation, bisphenol A-type epoxy resin, weight average molecular weight: about 10000), 12.5 g (1.0 equivalent) of bisphenol S, 2.4 g of triphenylphosphine, and 1000 g of methyl ethyl ketone were charged, and heated to 100°C while stirring under a nitrogen gas atmosphere. After visually confirming that they are dissolved, the mixture was cooled to 40°C to obtain a resin composition having a solid content of about 20 mass%. The solvent was removed from the resin composition to obtain a solid. Non-adhesive fluorine resin films (NITOFLON (trade name) No. 900UL, available from NITTO DENKO CORPORATION) were placed on an upper plate and a lower plate of a press machine, and the solid was placed on the non-adhesive fluorine resin film on the lower plate. Then, the press machine was heated to 160°C, and the resin composition was heated and compressed for 2 hours to obtain a 100 µm thick film-shaped solid joining agent (P-1) having a solid content of 100 mass%. The weight average molecular weight was about 37000. The epoxy equivalent was the detection limit or more. No peak of heat of fusion was detected in the DSC.

### Joined Body

As a joined body, the following one type (resin/metal) was produced.

### Resin/Metal

The solid joining agent P-1 cut into a size of 10 × 15 mm was placed on the copper base material (first member), and, immediately thereafter, the PPS base material (second member) was placed thereon. An overlap between these base materials was set to a width of 10 mm and a depth of 5 mm. The solid joining agent P-1 was disposed to cover the entire overlapping region between the base materials. That is, the first member and the second member were not in direct contact with each other, and the solid joining agent was interposed therebetween to prepare an unjoined laminate.

The metal was heated by high-frequency induction using a high-frequency induction welding machine (available from Seidensha Electronics Co., Ltd., Oscillator UH-2.5K, Press JIIP30S), and the test pieces were joined to each other by heating and pressurization. A force for pressurization was 110 N (pressure 2.2 MPa) and an oscillation frequency was 900 kHz. The oscillation time was 6 seconds.

A joined body for open time evaluation was prepared by the following procedures. The solid joining agent P-1 cut into a size of 10 × 15 mm was placed on the copper base material (first member) and allowed to stand for 3 days, and, thereafter, the PPS base material (second member) was placed thereon. An overlap between these base materials was set to a width of 10 mm and a depth of 5 mm. The solid joining agent P-1 was disposed to cover the entire overlapping region between the base materials. That is, the first member and the second member were not in direct contact with each other, and the solid joining agent was interposed therebetween to prepare an unjoined laminate.

The metal was heated by high-frequency induction using a high-frequency induction welding machine (available from Seidensha Electronics Co., Ltd., Oscillator UH-2.5K, Press JIIP30S), and the test pieces were joined to each other by heating and pressurization. A force for pressurization was 110 N (pressure 2.2 MPa) and an oscillation frequency was 900 kHz. The oscillation time was 5 seconds.

### Test Example 2

### Solid Joining Agent P-2

Into a reactor equipped with a stirrer, a reflux condenser, a gas inlet tube, and a thermometer, 20 g of Phenotote (trade name) YP-50S (available from NIPPON STEEL Chemical & Material CO., LTD., phenoxy resin, weight average molecular weight: about 50000) and 80 g of cyclohexanone were charged, and heated to 60°C while stirring, visually confirmed to be dissolved, and cooled to 40°C to obtain a resin composition having a solid content of 20 mass%. The solvent was removed from the resin composition to obtain a solid. Non-adhesive fluorine resin films (NITOFLON (trade name) No. 900UL, available from NITTO DENKO CORPORATION) were placed on an upper plate and a lower plate of a press machine, and the solid was placed on the non-adhesive fluorine resin film on the lower plate. Then, the press machine was heated to 160°C, and the resin composition was heated and compressed for 2 hours to obtain a 100 µm thick film-shaped solid joining agent (P-2) having a solid content of 100 mass%. The weight average molecular weight was 50000, and the epoxy equivalent was the detection limit or more. No peak of heat of fusion was detected in the DSC.

### Joined Body

A joined body listed in Table 1 and a joined body for open time evaluation were produced in the same manner as in Test Example 1 except that P-2 was used as the solid joining agent.

### Test Example 3

### Solid Joining Agent P-3

A solid joining agent (P-3) was obtained by mixing the resin composition P-2 and a crystalline epoxy resin YSLV-80XY (available from NIPPON STEEL Chemical & Material CO., LTD.) at a mass ratio of 98:2. The weight average molecular weight was 36000, the epoxy equivalent was 9600 g/eq, and the heat of fusion was 2 J/g.

### Joined Body

A joined body listed in Table 1 and a joined body for open time evaluation were produced in the same manner as in Test Example 1 except that P-3 was used as the solid joining agent.

### Test Example 4

### Solid Joining Agent P-4

A solid joining agent (P-4) was obtained by mixing the resin composition P-2 and a crystalline epoxy resin YSLV-80XY (available from NIPPON STEEL Chemical & Material CO., LTD.) at a mass ratio of 94:6. The weight average molecular weight was 35000, the epoxy equivalent was 2100 g/eq, and the heat of fusion was 4 J/g.

### Joined Body

A joined body listed in Table 1 and a joined body for open time evaluation were produced in the same manner as in Test Example 1 except that P-4 was used as the solid joining agent.

### Test Example 5

### Solid Joining Agent P-5

A solid joining agent (P-5) was obtained by mixing the resin composition P-2 and a crystalline epoxy resin YSLV-80XY (available from NIPPON STEEL Chemical & Material CO., LTD.) at a mass ratio of 89:11. The weight average molecular weight was 33000, the epoxy equivalent was 1745 g/eq, and the heat of fusion was 11 J/g.

### Joined Body

A joined body listed in Table 1 and a joined body for open time evaluation were produced in the same manner as in Test Example 1 except that P-5 was used as the solid joining agent.

### Test Example 6

### Solid Joining Agent P-6

Into a reactor equipped with a stirrer, a reflux condenser, a gas inlet tube, and a thermometer, 203 g (1.0 equivalent) of jER (trade name) 1007 (available from Mitsubishi Chemical Corporation, bisphenol A-type epoxy resin, weight average molecular weight: about 4060), 12.5 g (0.6 equivalents) of bisphenol S (molecular weight: 250), 2.4 g of triphenylphosphine, and 1000 g of methyl ethyl ketone were charged, and heated to 100°C while stirring under a nitrogen gas atmosphere. After visually confirming that they are dissolved, the mixture was cooled to 40°C to obtain a resin composition having a solid content of about 20 mass%. The solvent was removed from the resin composition to obtain a solid. Non-adhesive fluorine resin films (NITOFLON (trade name) No. 900UL, available from NITTO DENKO CORPORATION) were placed on an upper plate and a lower plate of a press machine, and the solid was placed on the non-adhesive fluorine resin film on the lower plate. Then, the press machine was heated to 160°C, and the resin composition was heated and compressed for 2 hours to obtain a 100 µm thick film-shaped solid joining agent (P-6) having a solid content of 100 mass%. The weight average molecular weight was about 30000, and the epoxy equivalent was the detection limit or more. No peak of heat of fusion was detected in the DSC.

### Joined Body

A joined body listed in Table 1 and a joined body for open time evaluation were produced in the same manner as in Test Example 1 except that P-6 was used as the solid joining agent.

### Comparative Test Example 1

### Solid Joining Agent Q-1

Two liquids of a thermosetting liquid epoxy adhesive E-250 (available from Konishi Co., Ltd., two-liquid type of bisphenol-type epoxy resin and amine curing agent) were mixed, applied to a release film, cured at 100°C for 1 hour, then cooled, and peeled off from the release film to obtain a 100 µm-thick film-shaped solid joining agent (Q-1). No peak of heat of fusion was detected in the DSC. The solid joining agent was insoluble in the solvent, and thus it was impossible to measure the epoxy equivalent and the weight average molecular weight.

### Joined Body

A joined body listed in Table 1 and a joined body for open time evaluation were produced in the same manner as in Test Example 1 except that Q-1 was used as the solid joining agent.

### Comparative Test Example 2

### Solid Joining Agent Q-2

An amorphous polycarbonate film (Iupilon (trade name) FE2000, available from Mitsubishi Engineering-Plastics Corporation, 100 µm thick) was used as a solid joined body Q-2. No peak of heat of fusion was detected in the DSC.

### Joined Body

A joined body listed in Table 1 and a joined body for open time evaluation were produced in the same manner as in Test Example 1 except that Q-2 was used as the solid joining agent.

### Comparative Test Example 3

### Solid Joining Agent Q-3

A crystalline epoxy resin YSLV-80XY (available from NIPPON STEEL Chemical & Material CO., LTD.) was used as a solid joining agent (Q-3). The epoxy equivalent was 192 g/eq. The weight average molecular weight was 340. The heat of fusion was 70 J/g.

### Joined Body

A joined body listed in Table 1 and a joined body for open time evaluation were produced in the same manner as in Test Example 1 except that Q-3 was used as the solid joining agent.

### Comparative Test Example 4

### Joined Body

Two liquids of a thermosetting liquid epoxy adhesive E-250 (available from Konishi Co., Ltd., two-liquid type including bisphenol-type epoxy resin and amine curing agent) were mixed, and applied to each of the same first member and second member as in Test Example 1, and the base materials were bonded to each other within 1 minute. Thereafter, the bonded body was allowed to stand for an oven at 100°C for 1 hour in a state of being fixed with a clip to cure the adhesive component, and then cooled to room temperature to prepare the joined body listed in Table 1. A joined body for open time evaluation was also produced in the same manner as described above except that the thermosetting liquid epoxy adhesive E-250 was applied to each of the first member and the second member, and then the base material A and the base material B were allowed to stand for 3 days and then bonded to each other.

### Comparative Test Example 5

Into a flask, 203 g (1.0 equivalent) of jER (trade name) 1007 (available from Mitsubishi Chemical Corporation, bisphenol A-type epoxy resin, weight average molecular weight: about 10000), 12.5 g (1.0 equivalent) of bisphenol S, 2.4 g of triphenylphosphine, and 1000 g of methyl ethyl ketone were charged, and stirred at normal temperature to obtain a liquid resin composition having a solid content of about 20 mass%. The liquid resin composition was applied onto the same second member as in Test Example 1 by bar coating, dried at room temperature for 30 minutes, and then allowed to stand in an oven at 160°C for 2 hours to form a solid coating layer of a thermoplastic epoxy resin polymer having a thickness of 100 µm on the surface of the second member. The weight average molecular weight of the coating layer was about 40000. The epoxy equivalent was the detection limit or more. No peak of heat of fusion was detected in the DSC.

### Joined Body

A joined body listed in Table 1 was produced in the same manner as in Test Example 1 except that the first member was directly disposed on the second member having the coating layer. For open time evaluation, a joined body for open time evaluation was also produced in the same manner as described above except that a coating layer of a thermoplastic epoxy resin polymer was formed on the surface of the second member, then allowed to stand for 3 days, and laminated with the first member.

### Comparative Test Example 6

Into a reactor equipped with a stirrer, a reflux condenser, a gas inlet tube, and a thermometer, 20 g of Phenotote (trade name) YP-50S (available from NIPPON STEEL Chemical & Material CO., LTD., phenoxy resin, weight average molecular weight: about 50000) and 80 g of cyclohexanone were charged, heated to 60°C while stirring, visually confirmed to be dissolved, and cooled to 40°C to obtain a liquid resin composition having a solid content of 20 mass%. The liquid resin composition was applied onto the same second member as in Test Example 1 by bar coating, and was left to stand in an oven at 70°C for 30 minutes to form a phenoxy resin coating layer having a thickness of 100 µm on the surface of the second member. The weight average molecular weight of the coating layer was about 50000. The epoxy equivalent was the detection limit or more. No peak of heat of fusion was detected in the DSC.

### Joined Body

A joined body listed in Table 1 was produced in the same manner as in Test Example 1 except that the first member was directly disposed on the second member having the phenoxy resin coating layer. For open time evaluation, a joined body for open time evaluation was also produced in the same manner as described above, except that the phenoxy resin coating layer was formed on the surface of the second member, allowed to stand for 3 days, and then laminated with the first member.

### Comparative Test Example 7

### Joined Body

A joined body listed in Table 1 and a joined body for open time evaluation were produced in the same manner as in Test Example 1 except that a crystalline polyamide-based hot melt adhesive film NT-120 (available from Nihon Matai Co., Ltd., thickness: 100 µm) was used as the solid joining agent. The heat of fusion was 60 J/g.

### Shear Adhesive Force

The joined bodies obtained in Test Examples 1 to 6 and Comparative Test Examples 1 to 7 were allowed to stand at a measurement temperature (23°C or 80°C) for 30 minutes or longer, and then subjected to a tensile shear adhesive strength test in an atmosphere of 23°C and 80°C in accordance with ISO19095 using a tensile tester (universal tester autograph "AG-X plus" (available from Shimadzu Corporation); load cell: 10 kN, tensile speed: 10 mm/min) to measure joining strength. The measurement results are presented in Table 1.

### Joining Process Time

The joining process time was measured as follows. The time from a start point to an end point was measured, with the time point of first contact of the joining agent with one or both of the base materials constituting the joined body being defined as the start point and the time point of completion of production of the joined body being defined as the end point. As for heating and pressurization times, the numerical values for the joined bodies listed in Table 1 were averaged.

### Recyclability

Each of the joined bodies listed in Table 1 was placed on a 200°C hotplate and heated for 1 minute, and then recyclability was judged on the basis of whether the joined body could be easily peeled off with a force of 1 N or less. Recyclability was evaluated as good (OK) when the joined body could be peeled off, and was evaluated as poor (NG) when the joined body could not be peeled off.

### Repairability

After the tensile shear strength test at 23°C, among the test pieces whose joining surfaces were fractured (the layer of the joined solid remained on the surface of the first member, the second member, or both), the first member was placed on the second member and a joined body was prepared in the same manner as in Test Example 1 to obtain a repair joined body. The shear adhesive force of the repair joined body at 23°C was measured in the same manner as in the test method. When the shear adhesive force was 80% or more of the first shear adhesive force, repairability was evaluated as good (OK), and when the shear adhesive force was less than 80%, repairability was evaluated as unsuitable (NG).

### Open Time Evaluation

The joined body for open time evaluation was used to perform the tensile shear adhesive strength test at 23°C. Based on a comparison between the test pieces prepared by the methods of Test Examples and Comparative Test Examples, the open time evaluation was determined as good (OK) when the shear adhesive force was 80% or more, and determined as unsuitable (NG) when the shear adhesive force was less than 80%. The open time evaluation being good (OK) means that the open time is long, resulting in excellent convenience.

**[Table 1-1]**

| Table 1 | | | | | | | | |
|---|---|---|---|---|---|---|---|---|
| | | | Test Example 1 | Test Example 2 | Test Example 3 | Test Example 4 | Test Example 5 | Test Example 6 |
| Properties of joining agent | | Form of joining agent | Film | Film | Film | Film | Film | Film |
| | | Resin main component | Thermoplastic epoxy resin | Phenoxy resin | Thermoplastic epoxy resin | Thermoplastic epoxy resin | Thermoplastic epoxy resin | Thermoplastic epoxy resin |
| | | Weight average molecular weight | 37000 | 50000 | 36000 | 35000 | 33000 | 30000 |
| | | Heat of fusion [J/g] | No fusion peak | No fusion peak | 2 | 4 | 11 | No fusion peak |
| | | Epoxy equivalent [g/eq] | Detection limit or more | Detection limit or more | 9600 | 2100 | 1745 | Detection limit or more |
| Adhesive force | 23°C Shear adhesive force [MPa] | Resin/metal | 19 | 20 | 18 | 15 | 14 | 20 |
| | 80°C Shear adhesive force [MPa] | Resin/metal | 15 | 20 | 15 | 13 | 12 | 10 |
| Convenience | Joining process time | | 5 sec | 5 sec | 5 sec | 5 sec | 5 sec | 5 sec |
| | Recyclability | | OK | OK | OK | OK | OK | OK |
| | Repairability | | OK | OK | OK | OK | OK | OK |
| | Open time evaluation | | OK | OK | OK | OK | OK | OK |

**[Table 1-2]**

| (Continued from Table 1) | | | | | | | | | |
|---|---|---|---|---|---|---|---|---|---|
| | | | Comparative Test Example 1 | Comparative Test Example 2 | Comparative Test Example 3 | Comparative Test Example 4 | Comparative Test Example 5 | Comparative Test Example 6 | Comparative Test Example 7 |
| Properties of joining agent | | Form of joining agent | Film | Film | Film | Liquid | Coating layer | Coating layer | Film |
| | | Resin main component | Thermosetting epoxy resin | Polycarbonate | Epoxy resin | Thermosetting epoxy resin | Thermoplastic epoxy resin | Phenoxy resin | Polyamide |
| | | Weight average molecular weight | - | - | 340 | - | 40000 | 50000 | - |
| | | Heat of fusion [J/g] | No fusion peak | No fusion peak | 70 | No fusion peak | No fusion peak | No fusion peak | 60 |
| | | Epoxy equivalent [g/eq] | - | - | 192 | - | Detection limit or more | Detection limit or more | - |
| Adhesive force | 23°C Shear adhesive force [MPa] | Resin/metal | 0 | 3 | 0 | 5 | 20 | 21 | 5 |
| | 80°C Shear adhesive force [MPa] | Resin/metal | 0 | 3 | 0 | 3 | 18 | 19 | 1 |
| Convenience | Joining process time | | 5 sec | 5 sec | 5 sec | 70 min | 150 min | 32 min | 5 sec |
| | Recyclability | | NG | OK | OK | NG | OK | OK | OK |
| | Repairability | | NG | OK | OK | NG | OK | OK | OK |
| | Open time evaluation | | NG | OK | OK | NG | OK | OK | OK |

The present invention makes it possible to manufacture a laminate in which a first conductive layer and/or a second conductive layer (first member) and an insulating layer (second member) are firmly joined to each other, in a short joining process time and a long open time.

### Industrial Applicability

The present invention is applicable to a method for manufacturing a laminate.

### Reference Signs List

10, 20, 30, 40, 50: Laminate
11, 21, 31, 41, 51: First resin layer
12, 22, 32, 42, 52: First conductive layer
13, 23, 33, 43, 53: Insulating layer
14, 24, 34, 44, 54: Second conductive layer
15, 25, 35, 45, 55: Adhesive layer
16, 26, 36, 46, 56: Second resin layer
47: Insertion portion
57: Heat sink
100: First resin layer
101: Accommodation portion
102A: Concave portion
102B: Convex portion
103: Fixation portion
104: Opening portion
105: First conductive layer
106: Second conductive layer

## Claims

1. A laminate comprising, in this order:
a first resin layer;
a first conductive layer;
an insulating layer; and
a second conductive layer,
the first resin layer comprising an accommodation portion, and
the first conductive layer being disposed in the accommodation portion of the first resin layer,
wherein between the first conductive layer and the insulating layer, and/or between the insulating layer and the second conductive layer, an adhesive layer is provided, the adhesive layer comprising a solid joining agent comprising, as a main component, an amorphous thermoplastic resin which comprises at least one selected from a thermoplastic epoxy resin and a phenoxy resin, the amorphous thermoplastic resin having an epoxy equivalent of 1600 or more or being free of an epoxy group, and a heat of fusion of the amorphous thermoplastic resin being 15 J/g or less.

2. The laminate according to claim 1, wherein the accommodation portion comprises a concave portion or an uneven portion.

3. The laminate according to claim 1, wherein the first conductive layer, the insulating layer, and the second conductive layer are disposed in the accommodation portion of the first resin layer.

4. The laminate according to claim 1 or 2, wherein an area of the accommodation portion included in the first resin layer is equal to or larger than an area of the first conductive layer.

5. The laminate according to any one of claims 1 to 3, further comprising a second resin layer on the second conductive layer opposite side from the insulating layer, and
optionally comprising the adhesive layer between the first resin layer and the first conductive layer, and/or between the second conductive layer and the second resin layer.

6. The laminate according to any one of claims 1 to 3, wherein the first resin layer is a cured product of a resin composition comprising a thermosetting resin.

7. The laminate according to claim 6, wherein the thermosetting resin comprises an unsaturated polyester.

8. The laminate according to any one of claims 1 to 3, wherein the first resin layer comprises a fixation portion configured to fix the first conductive layer, the insulating layer, and the second conductive layer.

9. A method for manufacturing a laminate, the method comprising:
a pre-joining step of preparing a laminate in which a first resin layer comprising an accommodation portion, a first conductive layer disposed in the accommodation portion of the first resin layer, an insulating layer, and a second conductive layer are disposed in this order, the pre-joining step comprising disposing a solid joining agent between the first conductive layer and the insulating layer, and/or between the insulating layer and the second conductive layer, the solid joining agent comprising, as a main component, an amorphous thermoplastic resin which comprises at least one selected from a thermoplastic epoxy resin and a phenoxy resin; and
a joining step of joining the first conductive layer to the insulating layer and/or joining the insulating layer to the second conductive layer by heating and pressurizing the laminate to melt the solid joining agent,
wherein the amorphous thermoplastic resin has an epoxy equivalent of 1600 or more or is free of an epoxy group, and a heat of fusion of the amorphous thermoplastic resin is 15 J/g or less.

10. The method for manufacturing a laminate according to claim 9, wherein the heating and pressurization are performed under conditions of from 100°C to 400°C and from 0.01 MPa to 20 MPa.

11. The method for manufacturing a laminate according to claim 9 or 10, wherein the solid joining agent before melting has a shape selected from the group consisting of a film, a rod, a pellet, and a powder.
